# EUROPÄISCHE PATENTSCHRIFT

(11) **EP 3 501 889 B1**
(45) Veröffentlichungstag und Bekanntmachung des Hinweises auf die Patenterteilung: **11.05.2022**
(21) Anmeldenummer: 18212305.9
(22) Anmeldetag: 13.12.2018
(51) Int. Cl.: B60N 2/50, B60N 2/54, B60N 2/90

(54) **FAHRZEUGSITZ UND LÄNGSHORIZONTALFEDERUNG**
VEHICLE SEAT AND FORE/AFT ISOLATOR
SIÈGE DE VÉHICULE ET SUSPENSION HORIZONTALE LONGITUDINALE

(30) Priorität: 19.12.2017 DE 102017130450
(43) Veröffentlichungstag der Anmeldung: 26.06.2019
(73) Patentinhaber: GRAMMER AG, 92289 Ursensollen (DE)
(72) Erfinder: Fillep, Johannes, 92262 Birgland (DE); Meier, Johann, 92269 Fensterbach (DE); Schanderl, Florian, 92521 Schwarzenfeld (DE); Schneider, Franz, 92263 Ebermannsdorf (DE)
(74) Vertreter: Hannke, Christian

(56) Entgegenhaltungen:
- DE-A1-102008 023 120
- DE-A1-102010 048 210
- US-A1- 2007 295 882
- US-A1- 2014 339 747

## Beschreibung

Die vorliegende Erfindung betrifft einen Fahrzeugsitz und eine Längshorizontalfederung zum Federn des Fahrzeugsitzes, wobei der Fahrzeugsitz ein Federungsunterteil, ein gegenüber dem Federungsunterteil verlagerbares Federungsoberteil und ein Scherengestell, welches das Federungsoberteil und das Federungsunterteil miteinander verbindet, aufweist.

Aus dem Stand der Technik sind bisher Längshorizontalfederungen bekannt, welche unter Verwendung von mechanischen oder pneumatischen Federeinheiten bzw. Dämpfereinheiten einen Fahrzeugsitz gegenüber einer Bewegung in einer Längsrichtung abfedert bzw. abdämpfen können. Derartige Konstruktionen sind meistens sehr aufwändig und lassen sich auch nicht im Nachhinein, zum Beispiel nach einer Beschädigung, leicht austauschen und erzeugen daher hohe Kosten. Weiter sind andere Lösungen bekannt, wobei bei diesen ein Federelement in eine Führungsschiene eingebracht wird, wobei die Federelemente elastisch ausgebildet sind und bei einer relativen Bewegung des Fahrzeugsitzes gegenüber dem Fahrzeugsitzunterbau eine Federung hervorrufen. Auch diese Möglichkeiten lassen keinen besonders guten Austausch zu und erzeugen auch hier durch Demontage des kompletten Sitzes durchaus relativ hohe Kosten. Die Offenbarungen DE 10 2008 023120 A1, US 2014/339747 A1 und US 2007/295882 A1 zeigen Beispiele von Fahrzeugsitzen und Längshorizontalfederungen aus dem Stand der Technik.

Die Aufgabe der vorliegenden Erfindung ist es daher, eine Längshorizontalfederung bereitzustellen, mit welcher auch nachträglich ein Längshorizontalfedern erreicht werden kann und welche insbesondere leicht austauschbar ausgestaltet ist.

Diese Aufgabe wird gelöst von einem Fahrzeugsitz und einer Längshorizontalfederung gemäß Anspruch 1.

Kerngedanke der Erfindung ist es, einen Fahrzeugsitz und eine Längshorizontalfederung zum Federn des Fahrzeugsitzes bereitzustellen, wobei der Fahrzeugsitz ein Federungsunterteil, ein gegenüber dem Federungsunterteil verlagerbares Federungsoberteil und ein Scherengestell, welches das Federungsoberteil und das Federungsunterteil miteinander verbindet, aufweist, wobei die Längshorizontalfederung ein erstes Längshorizontalfederungselement, welches mit dem Scherengestell verbunden ist, ein zweites Längshorizontalfederungselement, welches mit dem Federungsoberteil ortsfest verbunden ist, und ein erstes Federelement, welches zumindest in Wirkkontakt mit dem ersten und zweiten Längshorizontalfederungselement steht, umfasst, wobei das erste Federelement derart ausgebildet ist, dass bei einer Verlagerung des ersten Längshorizontalfederungselements relativ zu dem zweiten Längshorizontalfederungselements das erste Federelement deformierbar ist.

Durch die Deformation des ersten Federelements, je nach Ausgestaltung des ersten Federelements, wird eine Federung und/oder eine Dämpfung des Federungsoberteils gegenüber des Federungsunterteils erreicht. Die Längshorizontalfederung federt bzw. dämpft dabei die Bewegung des Federungsoberteils relativ zu dem Federungsunterteil in einer Längsrichtung des Fahrzeugsitzes.

Dadurch, dass das erste Längshorizontalfederungselement mit dem Scherengestell verbunden ist und das zweite Längshorizontalfederungselement mit dem Federungsoberteil verbundenen ist, ist eine leichte Austauschbarkeit der gesamten Längshorizontalfederung gegeben. Das erste Längshorizontalfederungselement kann dabei vorzugsweise mittels von zwei Lagerschalen mit einem ersten Verbindungsquerrohr des Scherengestells verbunden werden. Das zweite Längshorizontalfederungselement ist dabei mittels Schraubverbindungen mit dem Federungsoberteil verbunden. Durch Lösen der Schraubverbindungen bzw. der Verbindung mit dem Scherengestell mittels der Lagerschalen kann daher eine leichte Austauschbarkeit der gesamten Längshorizontalfederung gewährleistet werden.

Gemäß einer besonders bevorzugten Ausführungsform weist das Scherengestell ein erstes Scherenpaar und ein zweites Scherenpaar mit jeweils einer ersten Schwinge und einer zweiten Schwinge auf, wobei zwischen den ersten Schwingen und/oder den zweiten Schwingen ein erstes Verbindungsquerrohr angeordnet ist und das erste Längshorizontalfederungselement mit dem ersten Verbindungsquerrohr verbunden ist.

Das Verbindungsquerrohr verläuft dabei vorzugsweise in einer Breitenrichtung des Fahrzeugsitzes. Dadurch, dass das erste Längshorizontalfederungselement mit dem ersten Verbindungsquerrohr verbunden ist, wird eine besonders leichte Zugänglichkeit zu dem Längshorizontalfederungselement bzw. der gesamten Längshorizontalfederung ermöglicht. Eine Demontage des Fahrzeugsitzes oder ein aufwendiges Entfernen der Längshorizontalfederung, wie aus dem Stand der Technik bekannt ist, ist hierbei nicht mehr nötig.

Erfindungsgemäß weist das erste Längshorizontalfederungselement einen ersten Deformationsbereich und einen zweiten Deformationsbereich auf, wobei in einer neutralen Stellung der Längshorizontalfederung der erste Deformationsbereich und der zweite Deformationsbereich mit dem ersten Federelement in Wirkkontakt stehen und bei einer relativen Verlagerung des ersten Längshorizontalfederungselementes zu dem zweiten Längshorizontalfederungselement entweder der erste Deformationsbereich oder der zweite Deformationsbereich mit dem ersten Federelement in Wirkkontakt steht.

Unter einer neutralen Stellung ist hierbei zu verstehen, dass keine relative Bewegung des ersten Längshorizontalfederungselementes gegenüber dem zweiten Längshorizontalfederungselement vorliegt. Dadurch, dass sowohl der erste Deformationsbereich als auch der zweite Deformationsbereich in der neutralen Stellung der Längshorizontalfederung mit dem ersten Federelement in Wirkkontakt stehen, wird bei einer relativen Verlagerung des ersten Längshorizontalfederungselementes zu dem zweiten Längshorizontalfederungselement sofort mit einer Federung bzw. Dämpfung des Federungsoberteils gegenüber des Federungsunterteils begonnen. Ist das erste Längshorizontalfederungselement gegenüber dem zweiten Längshorizontalfederungselement verlagert worden, so steht entweder der erste Deformationsbereich oder der zweite Deformationsbereich mit dem ersten Federelement in Wirkkontakt. Das heißt, dass der jeweils andere Deformationsbereich dabei nicht mit dem ersten Federelement in Kontakt steht.

Abhängig von der Richtung der Verlagerung des ersten Längshorizontalfederungselements in Längsrichtung nach vorne oder nach hinten wird hierbei bestimmt, welcher der Deformationsbereiche mit dem ersten Federelement in Wirkkontakt steht. Bevorzugt bei einer Verlagerung des ersten Längshorizontalfederungselementes nach vorne in Längsrichtung gesehen, steht das zweite Deformationselement mit dem ersten Federelement in Wirkkontakt und bei einer Verlagerung des ersten Längshorizontalfederungselementes in Längsrichtung gesehen nach hinten, steht der erste Deformationsbereich mit dem ersten Federelement in Kontakt. Bevorzugt liegt der erste Deformationsbereich in Längsrichtung nach vorne gesehen, vor dem zweiten Deformationsbereich.

Gemäß einer besonders bevorzugten Ausführungsform erstreckt sich das erste Federelement in einer Längsrichtung des Fahrzeugsitzes. Das bedeutet, dass bei einer Verlagerung des ersten Längshorizontalfederungselementes gegenüber dem zweiten Längshorizontalfederungselement das erste Federelement in Längsrichtung deformiert wird.

Gemäß einer weiteren bevorzugten Ausführungsform weist die Längshorizontalfederung ein zweites Federelement auf, welches sich ebenso in der Längsrichtung erstreckt. Besonders bevorzugt sind das erste Federelement und das zweite Federelement parallel zueinander angeordnet. Weiter bevorzugt sind das erste Federelement und das zweite Federelement im Wesentlichen gleich ausgebildet. Das erste Federelement sowie das zweite Federelement können dabei teilweise oder vollständig aus Cellasto bestehen. Durch den Einsatz von Cellasto können hierbei die Kosten für die Federelemente deutlich reduziert werden bei einer hervorragenden Federeigenschaft bzw. Dämpfungseigenschaft, da Cellasto sowohl federnd als auch dämpfend wirken kann. Natürlich sind hierfür auch andere Materialien denkbar, wobei Cellasto die bevorzugte Ausgestaltung darstellt.

Gemäß einer weiteren bevorzugten Ausführungsform ist es vorgesehen, dass eine Verriegelungseinheit zum Verriegeln der Längshorizontalfederung vorgesehen ist, welche an dem Federungsoberteil um eine vertikale Schwenkachse schwenkbar gelagert ist. Die Verriegelungseinheit weist vorzugsweise eine erste Aussparung auf, welche mit einem in vertikaler Richtung verlaufenden Bolzenelement des ersten Längshorizontalfederungselementes in Kontakt bringbar ist.

Stehen das Bolzenelement und die erste Aussparung dabei in Kontakt, so ist die Längshorizontalfederung deaktiviert. Das heißt die Längshorizontalfederung ist verriegelt, sodass keine Verlagerung des Federungsoberteils gegenüber dem Federungsunterteil in Längsrichtung mehr möglich ist. Stehen die erste Aussparung und das Bolzenelement jedoch nicht in Kontakt, so ist eine Verlagerung des ersten Längshorizontalfederungselementes gegenüber dem zweiten Längshorizontalfederungselement möglich. Das heißt, das Federungsoberteil ist in Längsrichtung gegenüber dem Federungsunterteil verlagerbar, wobei durch die Ausgestaltung der Längshorizontalfederung bei einer Verlagerung eine Federung bzw. Dämpfung des Federungsoberteils hervorgerufen wird.

Gemäß einer weiteren bevorzugten Ausführungsform ist zwischen der Verriegelungseinheit und dem zweiten Längshorizontalfederungselement eine Federeinheit, insbesondere eine Zugfeder, derart angeordnet, dass bei einer Verriegelung der Längshorizontalfederung und bei einer relativen Verlagerung des ersten Längshorizontalfederungselements und des zweiten Längshorizontalfederungselements das Bolzenelement und die erste Aussparung in Kontakt bringbar sind. Das heißt insbesondere, dass mittels der Federeinheit die Längshorizontalfederung in einen arretierten Zustand versetzt werden kann; arretierter Zustand bedeutet hierbei, dass das Bolzenelement mit der Verriegelungseinheit in Kontakt steht. Denkbar ist auch, die Federeinheit als eine Druckfeder oder eine Schenkelfeder auszubilden. Besonders vorzugsweise ist die Federeinheit einerseits mit der Verriegelungseinheit und andererseits mit dem Federungsoberteil verbunden. Insbesondere weist die Federeinheit ein erstes Ende, welches mit der Verriegelungseinheit verbunden ist, und ein zweites Ende, welches mit dem Federungsoberteil verbunden ist, auf.

Die Federeinheit, insbesondere die Zugfeder ist aus den folgenden Gründen vorgesehen: In der neutralen Stellung der Längshorizontalfederung, das heißt, dass die Längshorizontalfederungselemente nicht relativ zueinander verlagert worden sind, sind das Bolzenelement und die erste Aussparung auf einer gemeinsamen Kreisbahn um die vertikale Schwenkachse angeordnet. Das heißt, dass bei einer Verschwenkung der Verriegelungseinheit um die vertikale Schwenkachse das Bolzenelement und die erste Aussparung lediglich durch die Verschwenkung der Verriegelungseinheit in Kontakt bringbar sind.

Befindet sich die Längshorizontalfederung jedoch nicht in der neutralen Stellung, das heißt, das erste Längshorizontalfederungselement ist gegenüber dem zweiten Längshorizontalfederungselement verlagert worden, so ist es notwendig das Bolzenelement und die erste Aussparung wieder auf der Kreisbahn anzuordnen. Dies wird eben durch Einsatz dieser Zugfeder erreicht, da durch die Zugfeder das Bolzenelement wieder auf die Kreisbahn, auf welcher die erste Aussparung immer noch liegt, gezwungen wird. Somit ist auch eine Verriegelung in einer verlagerten Position der Längshorizontalfederung möglich.

Bevorzugt ist dabei das Bolzenelement mit an dem ersten Deformationsbereich angeordnet. Natürlich sind auch andere Ausführungsformen denkbar, wobei diese bevorzugt wird, da dadurch, dass das zweite Längshorizontalfederungselement mit dem Federungsoberteil verbunden ist, in diesem Bereich eine Anordnung des Bolzenelements wenig sinnvoll ist. Man möchte bezüglich der Verriegelungseinheit daher eine Positionierung des Bolzenelements wählen, welche möglichst wenig mit dem Federungsoberteil störend wirken würde.

Gemäß einer weiteren bevorzugten Ausführungsform umfasst das erste und das zweite Scherenpaar jeweils ein Festlager und drei Loslager, wobei eines der Lager an einem Ende der ersten Schwinge oder der zweiten Schwinge angeordnet ist und das Festlager jeweils mit dem Federungsunterteil verbunden ist. Das Federungsoberteil weist hierbei Führungsschienenelemente auf, die mit den Loslagern der Schwingen in Kontakt stehen.

Dies bedeutet insbesondere, dass das Federungsoberteil mittels der Führungsschienenelemente und den daran angeordneten Loslagern und der Schwingen des Scherengestells mit dem Federungsunterteil verbunden ist. Da nur Loslager mit dem Federungsoberteil verbunden sind, ist das Federungsoberteil gegenüber dem Scherengestell in Längsrichtung verlagerbar. Dies ist hierbei die Voraussetzung, dass die Längshorizontalfederung derart leicht zugänglich, gemäß der vorherigen Beschreibung, angeordnet sein kann.

Zur besseren Betätigung der Verriegelungseinheit und der dadurch folgenden Verriegelung bzw. Arretierung und Entriegelung der Längshorizontalfederung ist vorzugsweise vorgesehen, ein Gestänge bereitzustellen, welches mit der Verriegelungseinheit einerseits und mit einem Betätigungshebel andererseits verbunden ist. Dabei ist der Betätigungshebel zur besseren Erreichbarkeit vorzugsweise in Längsrichtung gesehen vorne am Federungsoberteil angeordnet.

Weiter bevorzugt ist der Betätigungshebel schwenkbar um eine Schwenkachse gelagert, so dass der Betätigungshebel zwischen einer ersten Drehstellung und einer zweiten Drehstellung verlagerbar ist, wobei in der ersten Drehstellung die Längshorizontalfederung verriegelt und in der zweiten Drehstellung die Längshorizontalfederung entriegelt ist.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit der Zeichnung zu entnehmen. Hierbei zeigen:
- Fig. 1: die Längshorizontalfederung gemäß einer Ausführungsform in einer Seiten- und Explosionsansicht;
- Fig. 2: den Fahrzeugsitz mit einer Längshorizontalfederung;
- Fig. 3A: eine schematische Darstellung der Längshorizontalfederung im eingebauten Zustand und in einer neutralen Position;
- Fig. 3B: die Längshorizontalfederung der Figur 3A in einer verlagerten Position;
- Fig. 3C: die Längshorizontalfederung der Figur 3A in einer weiteren verlagerten Position;
- Fig. 4A: die Längshorizontalfederung und eine Verriegelungseinheit in einer schematischen Darstellung;
- Fig. 4B: die Längshorizontalfederung und die Verriegelungseinheit gemäß Figur 4A in einer weiteren schematischen Darstellung;
- Fig. 5A: die Längshorizontalfederung und die Verriegelungseinheit in einer schematischen Draufsicht in einer unverriegelten Position;
- Fig. 5B: die Längshorizontalfederung und die Verriegelungseinheit in einer schematischen Draufsicht in einer verriegelten Position und
- Fig. 6: die Längshorizontalfederung und die Verriegelungseinheit in einer schematischen Seitenansicht;
- Fig. 7: die Verriegelungseinheit mit Betätigungshebel.

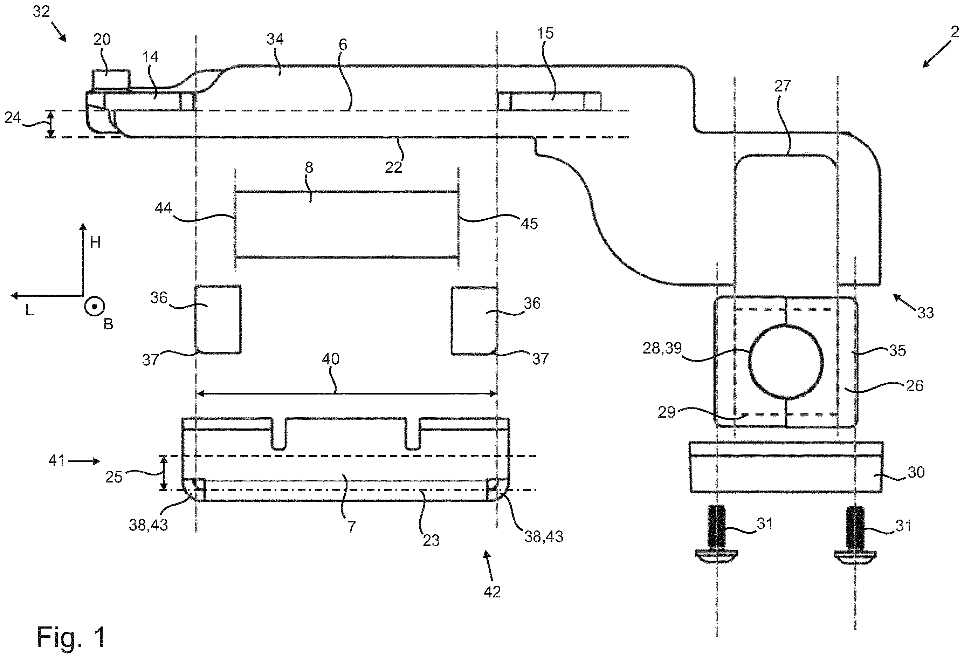

Die Figur 1 zeigt eine Längshorizontalfederung 2 gemäß einer besonders bevorzugten Ausführungsform. Wie zu erkennen ist, umfasst die Längshorizontalfederung 2 ein erstes Längshorizontalfederungselement 6 und ein zweites Längshorizontalfederungselement 7.

Es sei hier noch angemerkt, dass die Figur 1 eine Seitenansicht der Längshorizontalfederung 2 zeigt. Das erste Längshorizontalfederungselement 6 umfasst dabei einen ersten Endbereich 32, einen zweiten Endbereich 33, und einen Mittelbereich 34. In dem ersten Endbereich 32 ist zu erkennen, dass eine Aufnahme 27 vorgesehen ist, welche dazu vorgesehen und ausgebildet ist, zwei Lagerschalen 26 aufzunehmen, wobei die Lagerschalen identisch zueinander ausgebildet sind und miteinander in Kontakt stehen. Jede Lagerschale 26 weist dabei eine halbkreisförmige Öffnung 28 auf. Die Lagerschalen 26 sind derart angeordnet, dass die halbkreisförmigen Öffnungen 28 miteinander verbunden sind und eine kreisförmige Öffnung 39 ausbilden, welche ausgebildet ist, um ein erstes Verbindungsrohr (hier nicht gezeigt) zu umschließen.

Weiter ist zu erkennen, dass jede Lagerschale 26 einen Kontaktbereich 29 und einen Kragen 35 aufweist, wobei der Kontaktbereich 29 in dieser Form variiert, um von der Aufnahme 27 aufgenommen zu werden. Der Kragen 35 ist dazu vorgesehen, dass die Lagerschalen 26 in einer Breitenrichtung B gesichert gehalten werden können. Insbesondere ist der Kragen 35 der Lagerschalen 26 nicht in der Aufnahme 27 vorgesehen, sondern umschließt die Aufnahme 27 in der Breitenrichtung B.

Um die Lagerschalen 26 in der Aufnahme 27 halten zu können, ist ein Abschlusselement 30 vorgesehen, welches sowohl mit der Aufnahme als auch mit den Lagerschalen in Verbindung gebracht werden kann und mittels Schraubelementen 31 mit dem ersten Längshorizontalfederungselement verbindbar ist. Dazu wird das Abschlusselement 30 an der Öffnung der Aufnahme 27 angebracht, nachdem die Lagerschalen in die Aufnahme 27 eingebracht worden sind. Anschließend werden die Schraubelemente 31 dazu verwendet, das Abschlusselement 30 mit dem ersten Längshorizontalfederungselement zu verbinden.

Vorzugsweise können die Lagerschalen 26 die weitere Funktion aufweisen, dass innerhalb der Aufnahme 27 ein Höhenausgleich oder ein Toleranzausgleich in Höhenrichtung H gesehen bereitstellen, das heißt, dass durch die Ausgestaltung der Lagerschalen 26 die Längshorizontalfederung 2 in Höhenrichtung H gesehen gegenüber dem ersten Verbindungsquerrohr 13 und/oder dem Federungsoberteil 4 angepasst werden kann.

Weiter ist der Figur 1 zu entnehmen, dass die Längshorizontalfederung 2 einen ersten Deformationsbereich 14 und einen zweiten Deformationsbereich 15 umfasst, die sich hauptsächlich und im Wesentlichen in der Längsrichtung L und in der Breitenrichtung B erstrecken. Dabei sind die Deformationsbereiche 14,15 mit einem Abstand 40 voneinander in Längsrichtung beabstandet. In diesem Bereich ist der Mittelbereich 34 des ersten Längshorizontalfederungselementes 6 ausgebildet, und weist eine Unterseite 22 auf, welche mit einer Oberseite 23 des zweiten Längshorizontalfederungselementes in Verbindung steht.

Das zweite Längshorizontalfederungselement 7 umschließt dabei zumindest teilweise den Mittelbereich 34 des ersten Längshorizontalfederungselementes, wobei sich das zweite Längshorizontalfederungselement 7 in der Breitenrichtung B weiter erstreckt als das erste Längshorizontalfederungselement 6.

Das zweite Längshorizontalfederungselement 7 umfasst dabei ein erstes Ende 41 und ein zweites Ende 42, wobei an den Enden 41, 42 jeweils eine Stützplatte 38 angeordnet ist, welche mit der Oberseite des zweiten Längshorizontalfederungselementes 7 in Verbindung steht und dieses zumindest teilweise weiter führt und mit dieser Oberseite 23 mittels eines Übergangsbereiches 43 verbunden ist. Die Stützplatte 38 an sich erstreckt sich dabei mit einem zweiten Abstand 25 im Wesentlichen in Höhenrichtung. Der zweite Abstand 25 ist dabei kleiner ausgebildet als ein erster Abstand 24, welcher die Ausdehnung des ersten Längshorizontalfederungselementes 6 ausgehend von der Unterseite 22 bis zu dem ersten Deformationsbereich 14 bzw. dem zweiten Deformationsbereich 15, in Höhenrichtung H gesehen darstellt, dadurch kann gewährleistet werden, dass das erste Längshorizontalfederungselement 6 und das zweite Längshorizontalfederungselement 7 in der Längsrichtung L relativ zueinander verschiebbar sind.

Weiter ist der Figur 1 ein erstes Federelement 8 zu entnehmen, welches mit Stützelementen 36 verbunden ist.

Bevorzugt sind die Stützelemente 36 an einem ersten Ende 44 des ersten Federelements 8 und einem zweiten Ende 45 des Federelements 8 angeordnet.

Wie weiter zu erkennen ist, ist das erste Federelement 8 in einem Übermaß zu dem ersten Ende 44 und dem zweiten Ende 45 dargestellt, das heißt, dass eine Verbindung vorgesehen ist, welche die Stützelemente 36 sowie das erste Ende 44 und das zweite Ende 45 jeweils ineinander eingreifen lassen. Denkbar sind hierbei Verbindungen wie eine Schwalbenschwanznut. Insbesondere kann durch das Übermaß beziehungsweise der Ausgestaltung des Übermaßes eine Vorspannung des ersten Federelements 8 und/oder des zweiten Federelements 16 variiert werden, wodurch als Folge die Auslösekraft, ab welcher die Längshorizontalfederung 2 aktiv ist, variiert werden kann.

Weiter umfassen die Stützelemente 36 jeweils eine Verrundung 37, welche insbesondere komplementär zu dem Übergangsbereich 43 des zweiten Längshorizontalfederungselements 7 ausgebildet ist.

Weiter weist das erste Längshorizontalfederungselement 6 in seinem ersten Endbereich 32 ein Bolzenelement 20 auf, welches sich insbesondere in Höhenrichtung H erstreckt. Dieses Bolzenelement 20 ist dazu vorgesehen und eingerichtet, mit einer Verriegelungseinheit 17 (hier nicht gezeigt) in Kontakt gebracht zu werden, um die Längshorizontalfederung 2 zu verriegeln oder diese Verriegelung zu lösen. Die Verriegelungseinheit 17 wird in den nachfolgenden Figuren weiter genauer beschrieben.

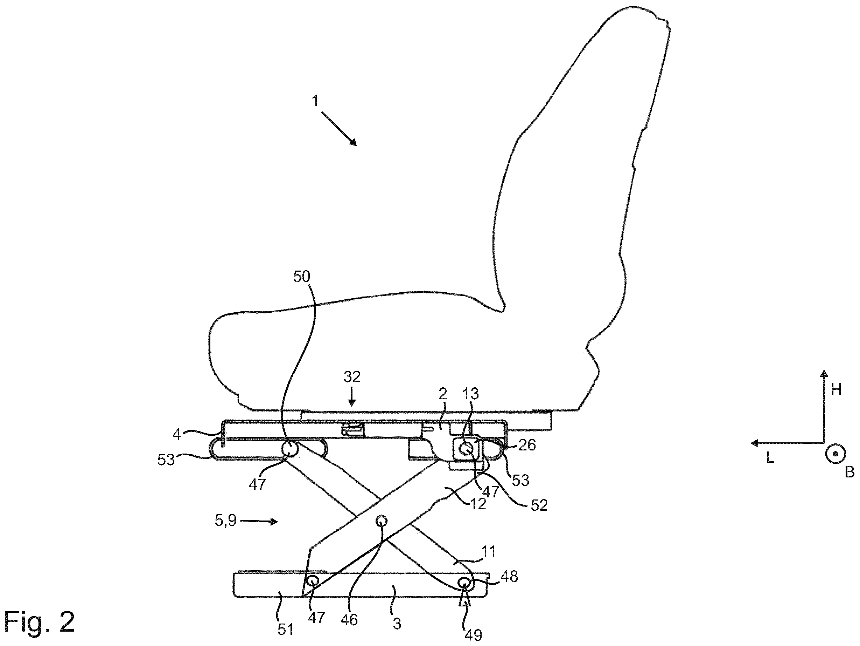

Die Figur 2 zeigt einen Fahrzeugsitz 1 gemäß einer bevorzugten Ausführungsform der vorliegenden Erfindung sowie eine Längshorizontalfederung 2 in einem eingebauten Zustand. Der Fahrzeugsitz 1 ist dabei auf einem Federungsoberteil 4 angeordnet, wobei das Federungsoberteil 4 mittels eines Scherengestells 5 mit einem Federungsunterteil 3 in Verbindung steht.

Wie zu erkennen ist, ist auch die Figur 2 in einer Seitenansicht dargestellt. Das Scherengestell 5 umfasst dabei ein erstes Scherenpaar 9 und ein zweites Scherenpaar 10, wobei nur das erste Scherenpaar 9 zu erkennen ist.

Das erste Scherenpaar umfasst eine erste Schwinge 11 und eine zweite Schwinge 12, welche mittels einer Scherenachse 46 miteinander schwenkbar verbunden sind. Die Scherenachse 46 verläuft dabei in der Breitenrichtung B. Die erste Schwinge 11 sowie die zweite Schwinge 12 umfassen dabei jeweils ein erstes Ende und ein zweites Ende, wobei das erste Ende 49 der ersten Schwinge 11 mittels eines Festlagers 48 mit dem Federungsunterteil 3 verbunden ist. Das zweite Ende 50 der ersten Schwinge sowie das erste Ende 51 und das zweite Ende 52 der zweiten Schwinge umfassen dabei jeweils ein Loslager 47, wobei das zweite Ende 50 der ersten Schwinge 11 und das zweite Ende 52 der zweiten Schwinge 12 jeweils mit einem Führungsschienenelement 53 in Verbindung stehen, wobei die Führungsschienenelemente 53 mit dem Federungsoberteil 4 verbunden sind.

Wie weiter aus der Figur 2 zu erkennen ist, ist die Längshorizontalfederung 2 mit dem ersten Verbindungsquerrohr 13 sowie mit dem Federungsoberteil 4 verbunden, wobei sich das erste Verbindungsquerrohr 13 in der Breitenrichtung B erstreckt und vorliegend die zweite Schwinge 12 des ersten Scherenpaars 9 und die zweite Schwinge 12 des zweiten Scherenpaars 10 miteinander verbindet.

Darüber hinaus ist der Figur 2 zu entnehmen, dass die Führungsschienenelemente 53 nutenförmig ausgebildet sind, wobei innerhalb dieser nutenförmigen Ausbildung jeweils ein Loslager 47 angeordnet ist. Durch diese nutenförmige Ausgestaltung der Führungsschienenelemente 53 kann ein Längsanschlag in Längsrichtung vorne und in Längsrichtung hinten definiert werden. Diese Endanschläge beziehen sich daher insbesondere auf eine maximale Verlagerung des Federungsoberteils 3 gegenüber dem Federungsunterteil 3.

Wie weiter zu erkennen ist, ist das erste Längshorizontalfederungselement 6 der Längshorizontalfederung 2 in einem zweiten Endbereich mittels Lagerschalen 26 mit dem ersten Verbindungsquerrohr 13 verbunden. Andererseits ist die Längshorizontalfederung 2 mittels des ersten Endbereichs 32 mit dem Federungsoberteil verbunden. Insbesondere ist das zweite Längshorizontalfederungselement 7 bevorzugt mittels Schraubverbindungen mit dem Federungsoberteil 4 verbunden.

Es ist hierbei auch denkbar, dass die Führungsschienenelemente 53 untereinander unterschiedlich ausgebildet sind. So ist es zum Beispiel denkbar, dass beispielsweise die Nut von jeder Seite umschlossen ausgebildet ist, oder dass die Nut nicht voll umschlossen ausgebildet ist. Das heißt, dass zumindest eine Öffnung der Nut vorhanden ist. In den Nuten der Führungsschienenelemente 53 sind die Loslager 47 der ersten Schwinge 11 bzw. der zweiten Schwinge 12 angeordnet und können in diesen Führungsschienenelementen 53 in Längsrichtung L verlagert werden.

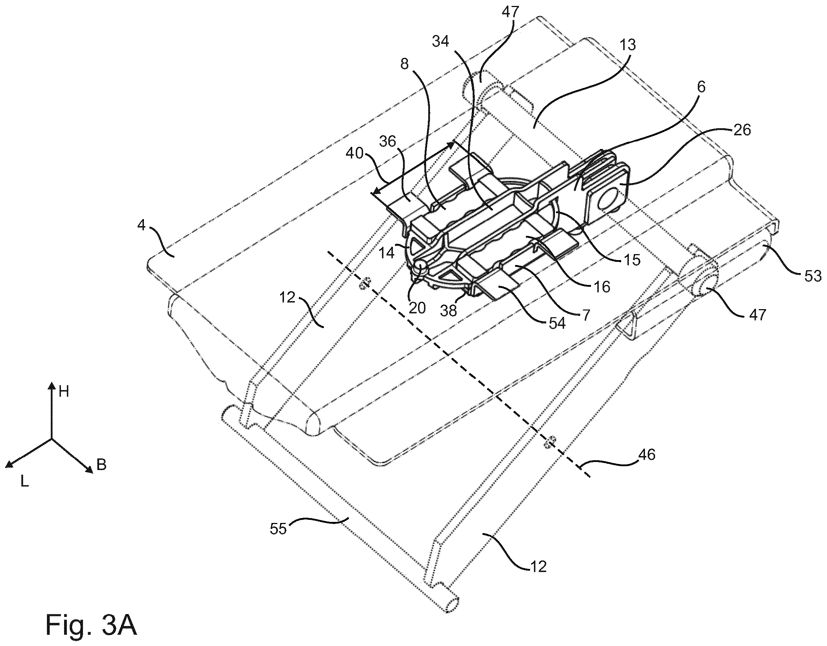

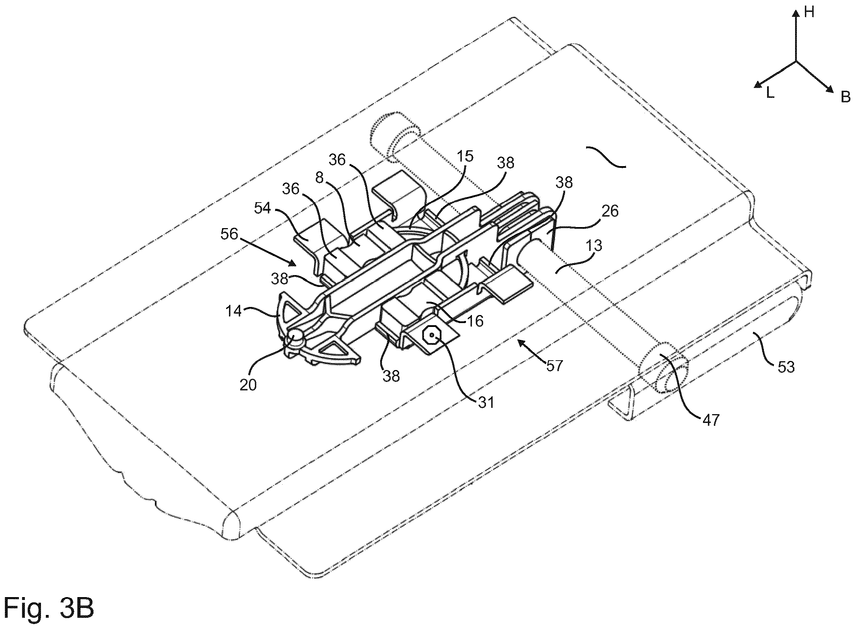

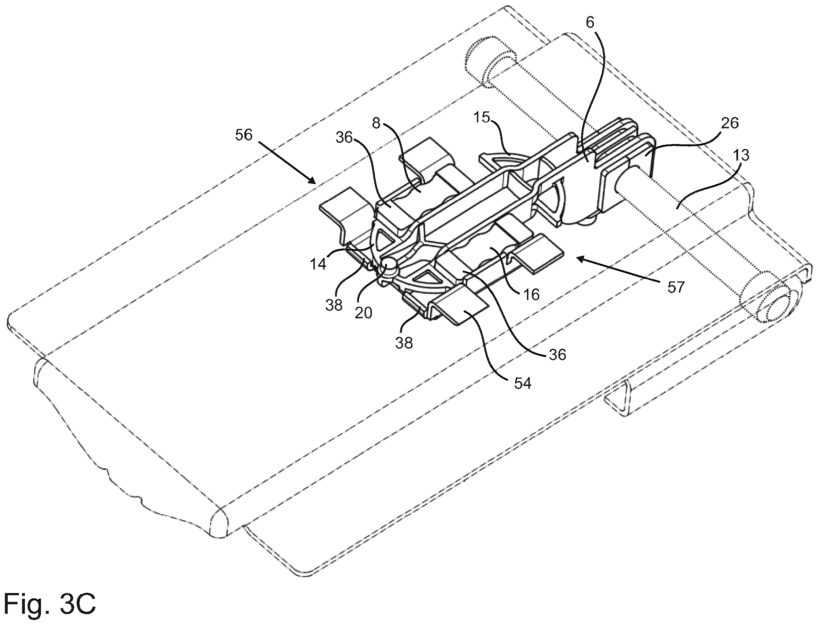

In der Figur 3 sind die Längshorizontalfederung 2 und Teile des Fahrzeugsitzes 1 in einer perspektivischen Draufsicht gezeigt. Dabei sind von dem ersten Scherenpaar 9 und dem zweiten Scherenpaar 10 jeweils die zweite Schwinge 12 zu erkennen, wobei die zweiten Schwingen 12 jeweils mit einem ersten Verbindungsquerrohr 13 und einem zweiten Verbindungsquerrohr 55 verbunden sind. Das erste Verbindungsquerrohr 13 umfasst hierbei insbesondere Loslager 47, welche mit den Führungsschienenelementen 53 in Kontakt stehen, sodass die Loslager in diesen Führungsschienen 53 verlagerbar sind.

Weiter ist auch die Längshorizontalfederung 2 mit dem ersten Längshorizontalfederungselement 6 und dem zweiten Längshorizontalfederungselement 7 gezeigt, wobei das erste Längshorizontalfederungselement 6 mittels Lagerschalen 26 mit dem ersten Verbindungsrohr 13 verbunden ist. Das zweite Längshorizontalfederungselement 7 ist hierbei mittels mindestens einem Verbindungselement 54 an dem Federungsoberteil 4 angeordnet, insbesondere mittels Schraubverbindungen (hier nicht gezeigt) verbunden.

Das erste Längshorizontalfederungselement 6 umfasst dabei einen ersten Deformationsbereich 14 und einen zweiten Deformationsbereich 15, welche in dem Abstand 40 voneinander beabstandet sind. Dabei ist die Beabstandung in Längsrichtung L zu sehen.

Weiter in Längsrichtung L gesehen, bildet der Bereich zwischen dem ersten Deformationselement 14 und dem zweiten Deformationsbereich 15 einen Mittelbereich 34 des ersten Längshorizontalfederungselements 6 aus. Das zweite Längshorizontalfederungselement 7 ist dabei derart ausgebildet, dass das zweite Längshorizontalfederungselement 7 diesen Mittelbereich 34, in Breitenrichtung B gesehen, umschließt.

Darüber hinaus umfasst die Längshorizontalfederung 2 auch ein erstes Federelement 8 und ein zweites Federelement 16, welche jeweils in der Längsrichtung L verlaufend angeordnet sind. An dem ersten Ende 44 bzw. dem zweiten Ende 45 des ersten Federelementes 8 bzw. des zweiten Federelementes 16 sind Stützelemente 36 vorgesehen, welche mit den Federelementen 8, 16 in Verbindung stehen.

In der Figur 3A ist insbesondere eine neutrale Stellung der Längshorizontalfederung 2 dargestellt, das heißt, dass das erste Längshorizontalfederungselement 6 nicht gegenüber dem zweiten Längshorizontalfederungselement 7 verlagert worden ist. Dies bedeutet insbesondere, dass keine Krafteinwirkung auf den Fahrzeugsitz 1 bzw. die Längshorizontalfederung 2 vorherrscht, das heißt, eine Dämpfung bzw. Federung in Längsrichtung ist nicht notwendig.

In dieser neutralen Stellung ist das erste Deformationselement 14 und das zweite Deformationselement 15 jeweils mit den Federelementen 8, 16 in Wirkkontakt, insbesondere mittels den Stützelementen 36. Die Federelemente 8, 16 sind insbesondere auch noch nicht ausgelenkt, das heißt noch nicht deformiert. Dadurch, dass die Deformationselemente 14, 15 mit den Federelementen 8, 16 in Kontakt stehen, ist bei einer Krafteinwirkung auf die Längshorizontalfederung 2 eine Federung bzw. Dämpfung des Fahrzeugsitzes 1 mittels der Längshorizontalfederung 2 möglich, wobei durch den Kontakt zwischen den Deformationselementen 14, 15 und den Federelementen 8, 16 eben sofort nach dieser Krafteinwirkung eine Feder- bzw. Dämpfungswirkung erzielt werden kann.

Weiter sind die Federelemente 8, 16 in Längsrichtung L gegenüber dem zweiten Längshorizontalfederungselement 7 mittels Stützplatten 38 gegenüber einem Herausfallen gesichert, so dass auch bei einer Verlagerung des ersten Längshorizontalfederungselements 6 gegenüber dem zweiten Längshorizontalfederungselement 7 eine Deformierung der Federelemente 8, 16 durchgeführt werden kann.

Die Stützelemente 38 verlaufen dabei vorzugsweise in der Breitenrichtung B und erstrecken sich dabei auch in der Höhenrichtung H.

Die Figur 3B zeigt die Situation der Längshorizontalfederung 2 im Falle einer Verlagerung des ersten Längshorizontalfederungselementes 6 gegenüber dem zweiten Längshorizontalfederungselement 7 in Längsrichtung nach vorne. Dies bedeutet, dass sich das Federungsoberteil 4 gegenüber dem Federungsunterteil 3 in Längsrichtung nach vorne bewegt. Wie weiter zu erkennen ist, werden die Federungselemente 18, 16 durch die Bewegung der Längshorizontalfederungselemente 6, 7 zueinander deformiert, vorliegend durch den zweite Deformationsbereich 15 der Längshorizontalfederung 2. Durch die relative Bewegung in den Längshorizontalfederungselementen 6, 7 zueinander löst sich dabei der erste Deformationsbereich 14 von den Federelementen 8, 16 und insbesondere von den Stützelementen 36, welche mit den Federelementen 8, 16 verbunden sind, und steht daher nicht mehr in Kontakt mit den Stützelementen 36. Der zweite Deformationsbereich 15 steht dabei jedoch weiter in Verbindung mit den Federelementen 8, 16 insbesondere mittels den Stützelementen 36.

Durch die Deformation der Federelemente 8, 16 wird dabei eine Federung bzw. Dämpfung hervorgerufen, abhängig davon, welches Material für die Federelemente 8, 16 gewählt worden ist.

Vorzugsweise bestehen die Federelemente 8, 16 zumindest teilweise oder vollständig aus Cellasto. Dieses Material weist sowohl Dämpfungs- als auch Federungseigenschaften auf.

Weiter ist zu erkennen, dass die Stützelemente 36 in einem vorderen Bereich 56 weiter in Kontakt mit den Stützplatten 38 sind, wobei in einem hinteren Bereich 57 die Stützelemente 36 sich von den Stützplatten 38 gelöst haben.

Die Figur 3C zeigt die Situation in einer nach hinten verlagerten Stellung, so dass nun das erste Deformationselement 14, jedoch nicht mehr das zweite Deformationselement 15 mit den Stützelementen 36 in Kontakt steht. Durch die relative Bewegung des ersten Längshorizontalfederungselementes 6 gegenüber dem zweiten Längshorizontalfederungselement 7, hervorgerufen durch eine Bewegung des Federungsoberteils 4 gegenüber dem Federungsunterteil 3 in Längsrichtung L nach hinten gesehen, hat sich das zweite Deformationselement von den Federelementen 8, 16 bzw. den Stützelementen 36 gelöst. Das erste Deformationselement 14 ist dabei weiter mit den Stützelementen bzw. den Federelementen 8, 16 in Kontakt. In dem vorderen Bereich 56 ist dabei das Stützelement 36 nicht mehr in Kontakt mit einer Stützplatte 38 in dem hinteren Bereich 37, jedoch ist weiterhin das Stützelement 36 mit der Stützplatte 38 in Kontakt.

Die nachfolgenden Figuren zeigen insbesondere eine Verriegelungseinheit 17 zum Verriegeln der Längshorizontalfederung 2. Das bedeutet, dass keine Federung bzw. Dämpfung mittels der Längshorizontalfederung 2 möglich ist. Aus Gründen der Übersicht wurde in den nachfolgenden Figuren das zweite Längshorizontalfederungselement 7 nicht mehr explizit dargestellt, sondern nur noch das erste Längshorizontalfederungselement 6 und die Verriegelungseinheit 17 sowie schematisch das Federungsoberteil 4.

Die Verriegelungseinheit 17 ist mit dem Federungsoberteil 4 mittels einer vertikalen Schwenkachse schwenkbar verbunden. Weiter weist die Verriegelungseinheit 17 eine Klinke 58 bzw. einen Klingenbereich 59 auf.

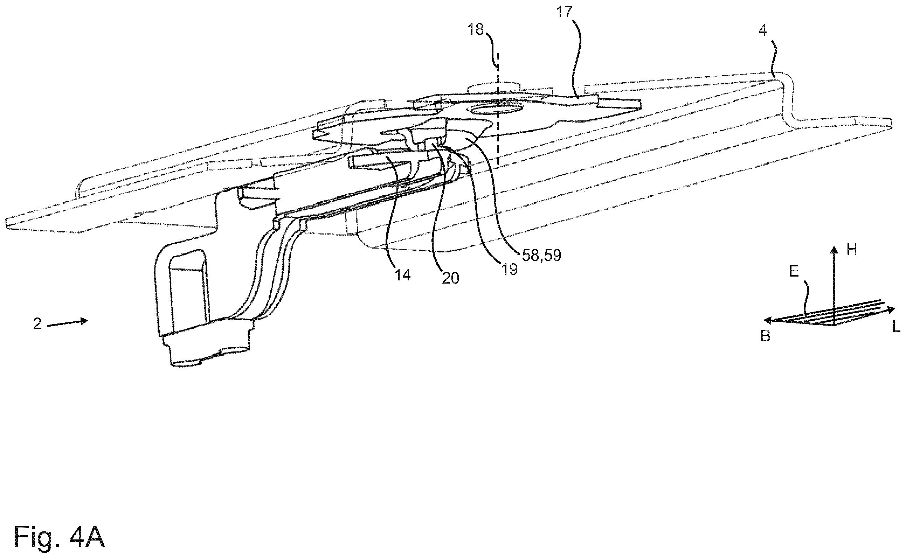

Wie der Figur 4A zu entnehmen ist, ist die Verriegelungseinheit 17 derart ausgebildet, dass sie sich hauptsächlich bzw. im Wesentlichen in Längsrichtung L und der Breitenrichtung B erstreckt. Die Ausdehnung in der Höhenrichtung H kann gegenüber den Ausdehnungen in Breitenrichtung B und Längsrichtung L vernachlässigt werden. Die Verriegelungseinheit 17 erstreckt sich daher in der Ebene E, welche durch die Breitenrichtung B und die Längsrichtung L aufgespannt wird. Der Klinkenbereich 59 bzw. die Klinke 58 sind jedoch in Höhenrichtung H gesehen unterhalb dieser Ebene E angeordnet, und die Verriegelungseinheit 17 ist dabei zum Großteil überhalb des Federungsoberteils 4 angeordnet, wobei die Klinke 58 unterhalb des Federungsoberteiles 4 angeordnet ist, jeweils in Höhenrichtung H gesehen.

Weiter zeigt die Figur 4A, dass die erste Aussparung 19 des Klinkenbereichs 59 bzw. der Klinke 58 mit dem Bolzenelement 20 in Kontakt steht, wobei das Bolzenelement 20 an dem ersten Deformationsbereich 14 angeordnet ist. Insbesondere ist das Bolzenelement 20 in Höhenrichtung H gesehen überhalb dem ersten Deformationsbereich 14 angeordnet. Durch Schwenkung des Verriegelungselements 17 um die vertikale Achse 18 ist es dabei möglich, die Verbindung zwischen dem Bolzenelement 20 und der Klinke 58 zu lösen. In dem Fall der Figur 4A ist, wie bereits erwähnt, das Bolzenelement 20 mit der ersten Aussparung 19 der Klinke 58 in Kontakt. Das bedeutet, dass die Längshorizontalfederung 2 verriegelt ist, sodass keine Dämpfung bzw. Federung mittels der Längshorizontalfederung 2 in Längsrichtung L gesehen möglich ist.

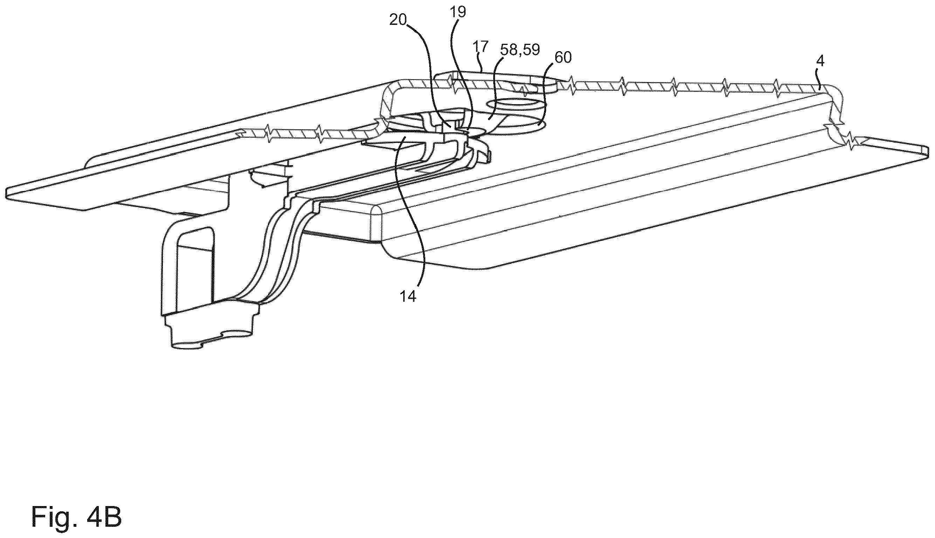

Die Figur 4B zeigt dabei die gleiche Darstellung wie die Figur 4A, wobei jedoch das Federungsoberteil 4 nicht mehr nur rein schematisch dargestellt ist, sondern in einer genaueren Weise. Dabei ist zu erkennen, dass das Federungsoberteil 4 eine Durchgangsöffnung 60 aufweist. Wie weiter zu erkennen ist, erstreckt sich die Klinke 58 bzw. der Klinkenbereich 59 durch diese Durchgangsöffnung 60 hindurch.

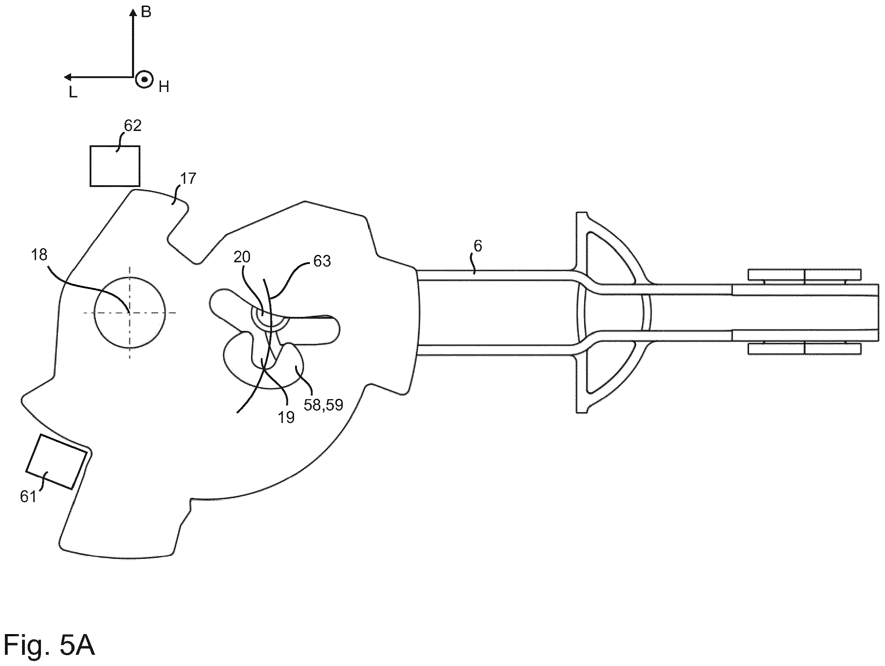

Die Figur 5A zeigt das Verriegelungselement 17 sowie das erste Längshorizontalfederungselement 6 in einer Draufsicht. Zur Übersichtlichkeit wurden sowohl das Federungsoberteil 4 als auch das zweite Längshorizontalfederungselement 7 nicht dargestellt. Weiter zeigt die Figur 5A die Verriegelungseinheit 17 in einer Position, in der die erste Aussparung 19 nicht in Kontakt mit dem Bolzenelement 20 ist, sodass die Längshorizontalfederung 2 nicht verriegelt ist. Eine Federung bzw. Dämpfung in der Längsrichtung L ist daher möglich. Weiter sind ein erstes Stoppelement 61 sowie ein zweites Stoppelement 62 zu erkennen, welche jeweils ortsfest mit dem Federungsoberteil 4 (hier nicht gezeigt), verbunden ist. Diese Stoppelemente 61, 62 begrenzen hierbei die Schwenkbewegung der Verriegelungseinheit 17 um die vertikale Schwenkachse 18. In der Position, wie sie in der Figur 5A dargestellt ist, steht das erste Stoppelement 61 mit der Verriegelungseinheit 17 in Kontakt, wobei das zweite Stoppelement 62 nicht mit der Verriegelungseinheit 17 in Wirkkontakt steht.

Wird die Verriegelungseinheit 17 um die vertikale Schwenkachse verschwenkt, insbesondere wie in der Figur dargestellt, entgegen dem Uhrzeigersinn, so steht nach der Verschwenkung das zweite Stoppelement 62 mit der Verriegelungseinheit 17 in Kontakt.

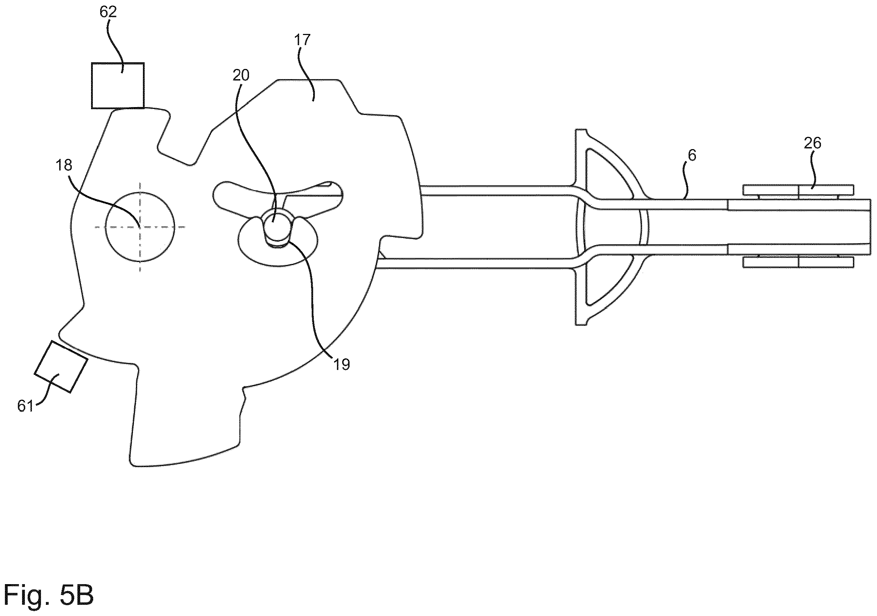

In einer neutralen Stellung der Längshorizontalfederung 2 sowie in den Figuren 5A und 5B dargestellt, sind das Bolzenelement 20 sowie die erste Aussparung 19 auf einer gemeinsamen Kreisbahn 63 angeordnet, sodass durch Verschwenken des Verriegelungselementes 17 ohne weiteres Zutun die erste Aussparung 19 und das Bolzenelement 20 in Kontakt bringbar sind.

Die Figur 5B zeigt genau diese Darstellung, in welcher das Bolzenelement 20 und die erste Aussparung 19 in Kontakt gebracht worden sind. Weiter hat sich die Verriegelungseinheit 17 durch die Verschwenkung der Verriegelungseinheit 17 um die vertikale Schwenkachse 18 das erste Stoppelement 61 von der Verriegelungseinheit 17 gelöst, wobei das zweite Stoppelement 62 nun in Kontakt mit der Verriegelungseinheit 17 steht. In der verriegelten Position sowie in der Figur 5B dargestellt, ist die Längshorizontalfederung 2 in einem verriegelten Zustand. Das bedeutet, dass keine Verlagerung des ersten Längshorizontalfederungselementes 6 gegenüber dem zweiten Längshorizontalfederungselement 7 möglich ist, da das erste Längshorizontalfederungselement 6 einerseits durch das Bolzenelement 20 mit der Verriegelungseinheit stark verbunden ist, und andererseits mittels der Lagerschalen 26 fest mit dem ersten Verbindungsquerrohr 13 verbunden ist.

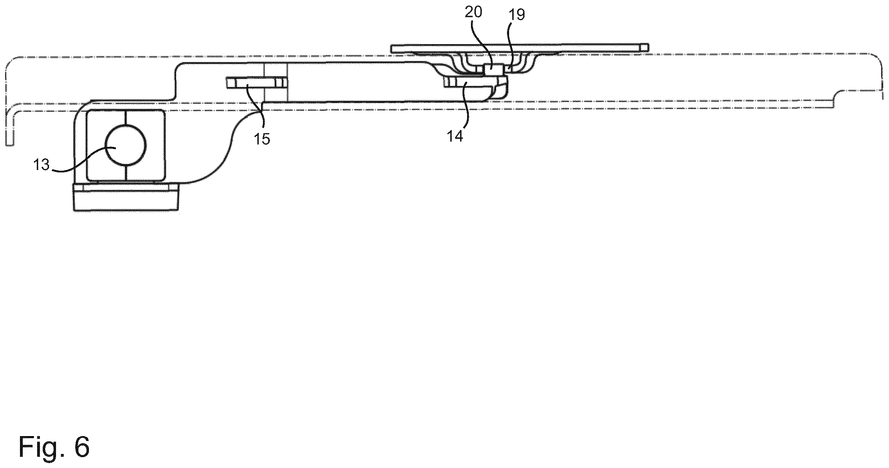

Die Figur 6 zeigt die Darstellung der Figur 5A bzw. der Figur 5B in einer Seitenansicht.

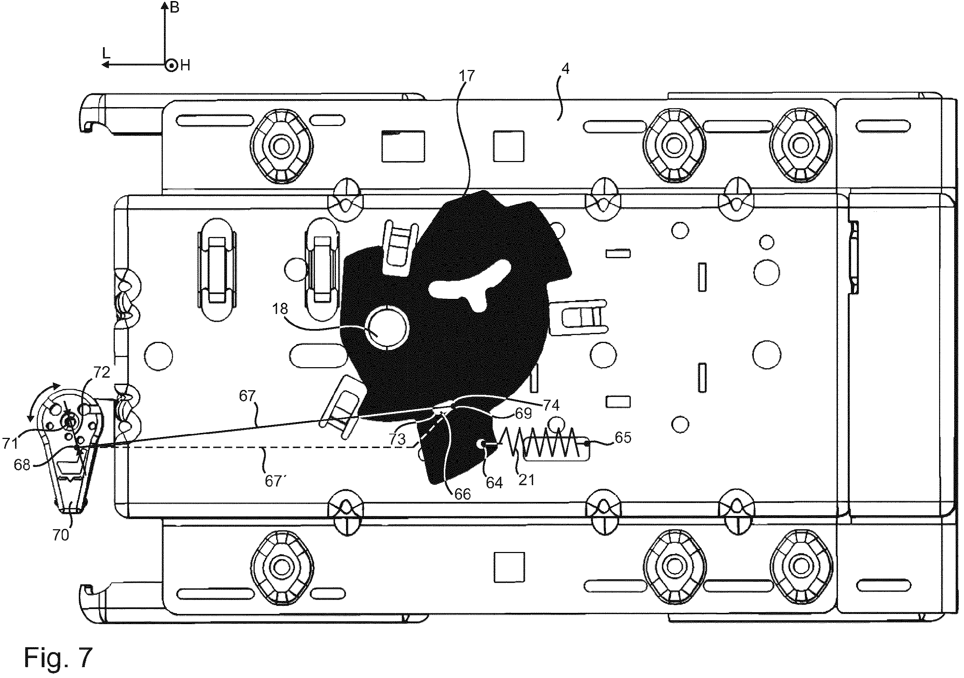

Die Figur 7 zeigt weiter die Verriegelungseinheit 17 verbunden mit dem Federungsoberteil 4 in einer Draufsicht. Weiter sind in der Figur 7 Bauteile angegeben, mittels welchen die Verriegelungseinheit 17 betätigbar ist, um die Längshorizontalfederung 2 (hier nicht gezeigt) zu verriegeln und zu entriegeln, oder anders ausgedrückt, zu deaktivieren und zu aktivieren.

Wie der Figur 7 weiter zu entnehmen ist, ist eine Federeinheit 21 vorgesehen, welche ein erstes Ende 64 und ein zweites Ende 65 aufweist, wobei das erste Ende 64 mit der Verriegelungseinheit 17 und das zweite Ende 65 mit dem Federungsoberteil 4 verbunden ist. Vorzugsweise handelt es sich bei der Federeinheit 21 um eine Zugfeder, wobei es auch denkbar ist, die Federeinheit 21 als Druckfeder oder Schenkelfeder auszubilden, wobei eine entsprechende Veränderung der Anordnung mit einhergeht.

Darüber hinaus ist ein Betätigungshebel 70 erkennbar, welcher vorliegend in Längsrichtung L gesehen vorne am Federungsoberteil 4 angeordnet ist. Insbesondere ist der Betätigungshebel 70 schwenkbar um eine Schwenkachse 71 schwenkbar mit dem Federungsoberteil 4 verbunden.

Zusätzlich ist noch ein Gestänge 67, 67' vorgesehen, welches ein erstes Ende 68 und ein zweites Ende 69 aufweist, wobei das erste Ende 68 mit dem Betätigungshebel 70 und das zweite Ende 69 mit der Verriegelungseinheit 17 verbunden ist. Vorzugsweise ist das zweite Ende 69 des Gestänges 67, 67' mit einem Langloch 66 der Verriegelungseinheit 17 verbunden. Weiter vorzugsweise ist das erste Ende 68 des Gestänges 67, 67' mit dem Betätigungshebel 70 derart verbunden, dass das erste Ende 68 in einem vierten Abstand 72 zu der Schwenkachse 71 angeordnet ist. Es ist denkbar, dass das Gestänge 67, 67' aus einem Gestängeteil besteht, wie mit dem Bezugszeichen 67 gekennzeichnet, oder aus mehreren Gestängeteilen, wie mit dem Bezugszeichen 67' gekennzeichnet.

Unabhängig von der Ausgestaltung des Gestänges 67, 67' wird bei einer Verschwenkung des Betätigungselements 70 um die Schwenkachse 71 entsprechend das erste Ende 68 um die Schwenkachse 71 verschwenkt, was in einer Verschiebung des zweiten Endes 69 in dem Langloch 66 resultiert, wodurch die Verriegelungseinheit 17 um die vertikale Schwenkachse 18 einen Freiheitsgrad bezüglich der Verschwenkung erlangt, da die Verschiebung im Langloch eine Verschwenkung der Verriegelungseinheit 17 ermöglicht. Dies ist beispielsweise den Figuren 5A und 5B zu entnehmen.

Dabei sind die Situationen wie folgt: in der Figur 5A ist die Verriegelungseinheit 17 nicht in Kontakt mit dem Bolzenelement 20, und ist in Kontakt mit dem ersten Stoppelement 61. Das zweite Ende 69 des Gestänges 67, 67' ist dabei mit einem ersten Ende 73 des Langlochs 66 in Kontakt, wobei das erste Ende 73 des Langlochs 66 dem Ende entspricht, welches weiter von der Aussparung 19 der Verriegelungseinheit 17 entfernt angeordnet ist.

Wird das zweite Ende 69 von dem ersten Ende 73 des Langlochs 66 zu dem zweiten Ende 74 des Langlochs 66 verschoben, so ist es der Verriegelungseinheit 17 möglich, zumindest um die Länge des Langlochs 66 zu verschwenken, bis die Verriegelungseinheit 17 mit dem zweiten Stoppelement 62 in Kontakt steht. Ebenso ist die Aussparung 19 in Kontakt mit dem Bolzenelement 20.

Eine Verschwenkung der Verriegelungseinheit 17 wird dabei durch die Federeinheit 21 hervorgerufen, welche insbesondere zur besseren Funktionalität eine bestimmte Vorspannung aufweist. Wird das zweite Ende 69 des Gestänges 67, 67' nun wieder vom zweiten Ende 74 des Langlochs 66 zu dem ersten Ende 73 verschoben, so wird hierdurch gleichzeitig die Verriegelungseinheit 17 als Ganzes mitgenommen und in umgekehrter Richtung um die vertikale Schwenkachse 18 verschwenkt. Die Federeinheit 21 wird dabei wieder vorgespannt.

### Bezugszeichenliste

- 1: Fahrzeugsitz
- 2: Längshorizontalfederung
- 3: Federungsunterteil
- 4: Federungsoberteil
- 5: Scherengestell
- 6: erstes Längshorizontalfederungselement
- 7: zweites Längshorizontalfederungselement
- 8: erstes Federelement
- 9: erstes Scherenpaar
- 10: zweites Scherenpaar
- 11: erste Schwinge
- 12: zweite Schwinge
- 13: erstes Verbindungsquerrohr
- 14: erster Deformationsbereich
- 15: zweiter Deformationsbereich
- 16: zweites Federelement
- 17: Verriegelungseinheit
- 18: vertikale Schwenkachse
- 19: erste Aussparung
- 20: Bolzenelement
- 21: Federeinheit
- 22: Unterseite erstes Längshorizontalfederungselement
- 23: Oberseite zweites Längshorizontalfederungselement
- 24: erster Abstand
- 25: zweiter Abstand
- 26: Lagerschale
- 27: Aufnahme
- 28: halbkreisförmige Öffnung
- 29: Kontaktbereich
- 30: Abschlusselement
- 31: Schraubelement
- 32: erster Endbereich
- 33: zweiter Endbereich
- 34: Mittelbereich
- 35: Kragen
- 36: Stützelement
- 37: Verrundung
- 38: Stützplatte
- 39: kreisförmige Öffnung
- 40: Abstand
- 41: erstes Ende zweites Längshorizontalfederungselement
- 42: zweites Ende zweites Längshorizontalfederungselement
- 43: Übergangsbereich
- 44: erstes Ende
- 45: zweites Ende
- 46: Scherenachse
- 47: Loslager
- 48: Festlager
- 49: erstes Ende erste Schwinge
- 50: zweites Ende erste Schwinge
- 51: erstes Ende zweite Schwinge
- 52: zweites Ende zweite Schwinge
- 53: Führungsschienenelement
- 54: Verbindungselement
- 55: zweites Verbindungsquerrohr
- 56: vorderer Bereich
- 57: hinterer Bereich
- 58: Klinke
- 59: Klinkenbereich
- 60: Durchgangsöffnung
- 61: erstes Stoppelement
- 62: zweites Stoppelement
- 63: Kreisbahn
- 64: erstes Ende der Federeinheit
- 65: zweites Ende der Federeinheit
- 66: Langloch
- 67: Gestänge
- 67': Gestänge
- 68: erstes Ende des Gestänges
- 69: zweites Ende des Gestänges
- 70: Betätigungshebel
- 71: Schwenkachse
- 72: vierter Abstand
- 73: erstes Ende des Langlochs
- 74: zweites Ende des Langlochs

## Patentansprüche

1. Fahrzeugsitz (1) und Längshorizontalfederung (2) zum Federn des Fahrzeugsitzes (1), wobei der Fahrzeugsitz (1) ein Federungsunterteil (3), ein gegenüber dem Federungsunterteil (3) verlagerbares Federungsoberteil (4) und ein Scherengestell (5), welches das Federungsoberteil (4) und das Federungsunterteil (3) miteinander verbindet, aufweist, wobei die Längshorizontalfederung (2) ein erstes Längshorizontalfederungselement (6), welches mit dem Scherengestell (5) verbunden ist, ein zweites Längshorizontalfederungselement (7), welches mit dem Federungsoberteil (4) ortsfest verbunden ist, und ein erstes Federelement (8), welches zumindest in Wirkkontakt mit dem ersten (6) und zweiten Längshorizontalfederungselement (7) steht, umfasst, wobei das erste Federelement (8) derart ausgebildet ist, dass bei einer Verlagerung des ersten Längshorizontalfederungselementes (6) relativ zu dem zweiten Längshorizontalfederungselement (7) das erste Federelement (8) deformierbar ist, **dadurch gekennzeichnet, dass** das erste Längshorizontalfederungselement (6) einen ersten Deformationsbereich (14) und einen zweiten Deformationsbereich (15) aufweist, wobei in einer neutralen Stellung der erste Deformationsbereich (14) und der zweite Deformationsbereich (15) mit dem ersten Federelement (8) in Wirkkontakt stehen und bei einer relativen Verlagerung des ersten Längshorizontalfederungselementes (6) zu dem zweiten Längshorizontalfederungselement (7) entweder der erste Deformationsbereich (14) oder der zweite Deformationsbereich (15) mit dem ersten Federelement (8) in Wirkkontakt steht.

2. Fahrzeugsitz (1) und Längshorizontalfederung (2) nach Anspruch 1,
**dadurch gekennzeichnet, dass**
das Scherengestell (5) ein erstes Scherenpaar (9) und ein zweites Scherenpaar (10) mit jeweils einer ersten Schwinge (11) und einer zweiten Schwinge (12) aufweist, wobei zwischen den ersten Schwingen (11) und/oder den zweiten Schwingen (12) ein erstes Verbindungsquerrohr (13) angeordnet ist und das erste Längshorizontalfederungselement (6) mit dem ersten Verbindungsquerrohr (13) verbunden ist.

3. Fahrzeugsitz (1) und Längshorizontalfederung (2) nach Anspruch 1 oder 2,
**dadurch gekennzeichnet, dass**
sich das erste Federelement (8) in einer Längsrichtung (L) erstreckt.

4. Fahrzeugsitz (1) und Längshorizontalfederung (2) nach einem der Ansprüche 1-3,
**dadurch gekennzeichnet, dass**
die Längshorizontalfederung (2) ein zweites Federelement (16) aufweist, welches sich in einer Längsrichtung (L) erstreckt.

5. Fahrzeugsitz (1) und Längshorizontalfederung (2) nach einem der Ansprüche 1-4,
**dadurch gekennzeichnet, dass**
eine Verriegelungseinheit (17) zum Verriegeln der Längshorizontalfederung (2) vorgesehen ist, welche an dem Federungsoberteil (4) um eine vertikale Schwenkachse (18) schwenkbar gelagert ist, wobei die Verriegelungseinheit (17) eine erste Aussparung (19) aufweist, welche mit einem in vertikaler Richtung verlaufenden Bolzenelement (20) des ersten Längshorizontalfederungselementes (6) in Kontakt bringbar ist.

6. Fahrzeugsitz (1) und Längshorizontalfederung (2) nach Anspruch 5,
**dadurch gekennzeichnet, dass**
zwischen der Verriegelungseinheit (17) und dem zweiten Längshorizontalfederungselement (7) ein Federelement (21), insbesondere eine Zugfeder, derart angeordnet ist, dass bei Verriegelung der Längshorizontalfederung (2) bei einer relativen Verlagerung des ersten Längshorizontalfederungselementes (6) und des zweiten Längshorizontalfederungselementes (7) das Bolzenelement (20) und die erste Aussparung (19) in Kontakt bringbar sind.

7. Fahrzeugsitz (1) und Längshorizontalfederung (2) nach Anspruch 2,
**dadurch gekennzeichnet, dass**
das erste Scherenpaar (9) und das zweite Scherenpaar (10) jeweils ein Festlager (48) und drei Loslager (47) umfassen, wobei eines der Lager (47, 48) an einem Ende der ersten Schwinge (11) oder der zweiten Schwinge (12) angeordnet ist und das Festlager (48) jeweils mit dem Federungsunterteil (3) verbunden ist, wobei das Federungsoberteil (4) Führungsschienenelemente (53) aufweist, die mit den Loslagern (47) der Schwingen (11, 12) in Kontakt stehen.

## Claims

1. Vehicle seat (1) and longitudinal horizontal suspension (2) for suspending the vehicle seat (1), the vehicle seat (1) having a suspension lower part (3), a suspension upper part (4) which can be displaced with respect to the suspension lower part (3), and a scissors-type frame (5) which connects the suspension upper part (4) and the suspension lower part (3) to one another, wherein the longitudinal horizontal suspension (2) comprises a first longitudinal horizontal suspension element (6), which is connected to the scissor-type frame (5), a second longitudinal horizontal suspension element (7), which is fixedly connected to the upper suspension part (4), and a first spring element (8), which is at least in operative contact with the first (6) and second longitudinal horizontal suspension element (7), the first spring element (8) being designed in such a way that, in the event of a displacement of the first longitudinal horizontal suspension element (6) relative to the second longitudinal horizontal suspension element (7), the first spring element (8) can be deformed, **characterised in that**
the first longitudinal horizontal spring element (6) has a first deformation region (14) and a second deformation region (15), wherein, in a neutral position, the first deformation region (14) and the second deformation region (15) are in operative contact with the first spring element (8) and, in the event of a relative displacement of the first longitudinal horizontal suspension element (6) with respect to the second longitudinal horizontal suspension element (7), either the first deformation region (14) or the second deformation region (15) is in operative contact with the first spring element (8).

2. Vehicle seat (1) and longitudinal horizontal suspension (2) according to claim 1, **characterised in that**
the scissor-type frame (5) has a first pair of scissors (9) and a second pair of scissors (10), each having a first swing arm (11) and a second swing arm (12), a first connecting transverse tube (13) being arranged between the first swing arms (11) and/or the second swing arms (12), and the first longitudinal horizontal suspension element (6) being connected to the first connecting transverse tube (13).

3. Vehicle seat (1) and longitudinal horizontal suspension (2) according to claim 1 or 2, **characterised in that**
the first spring element (8) extends in a longitudinal direction (L).

4. Vehicle seat (1) and longitudinal horizontal suspension (2) according to any of claims 1-3,
**characterised in that**
the longitudinal horizontal suspension (2) has a second spring element (16) extending in a longitudinal direction (L).

5. Vehicle seat (1) and longitudinal horizontal suspension (2) according to any of claims 1-4,
**characterised in that**
a locking unit (17) is provided for locking the longitudinal horizontal suspension (2), which is mounted on the suspension upper part (4) so as to be pivotable about a vertical pivot axis (18), the locking unit (17) having a first recess (19) which can be brought into contact with a bolt element (20), extending in the vertical direction, of the first longitudinal horizontal suspension element (6).

6. Vehicle seat (1) and longitudinal horizontal suspension (2) according to claim 5,
**characterised in that**
a spring element (21), in particular a tension spring, is arranged between the locking unit (17) and the second longitudinal horizontal suspension element (7) in such a way that, when the longitudinal horizontal suspension (2) is locked, the bolt element (20) and the first recess (19) can be brought into contact in the event of a relative displacement of the first longitudinal horizontal suspension element (6) and the second longitudinal horizontal suspension element (7).

7. Vehicle seat (1) and longitudinal horizontal suspension (2) according to claim 2,
**characterised in that**
the first pair of scissors (9) and the second pair of scissors (10) each comprise a fixed bearing (48) and three loose bearings (47), one of the bearings (47, 48) being arranged at one end of the first swing arm (11) or of the second swing arm (12) and the fixed bearing (48) being connected in each case to the suspension lower part (3), the suspension upper part (4) having guide rail elements (53) which are in contact with the loose bearings (47) of the swing arms (11, 12).

## Revendications

1. Siège de véhicule (1) et suspension horizontale longitudinale (2) pour la suspension du siège de véhicule (1), le siège de véhicule (1) présentant une partie inférieure de suspension (3), une partie supérieure de suspension (4) déplaçable par rapport à la partie inférieure de suspension (3) et un châssis en ciseaux (5), lequel relie entre elles la partie supérieure de suspension (4) et la partie inférieure de suspension (3), la suspension horizontale longitudinale (2) comportant un premier élément de suspension horizontale longitudinale (6), lequel est relié au châssis en ciseaux (5), un deuxième élément de suspension horizontale longitudinale (7), lequel est relié de manière fixe à la partie supérieure de suspension (4), et un premier élément ressort (8), lequel est au moins en contact actif avec le premier (6) et le deuxième élément de suspension horizontale longitudinale (7), le premier élément ressort (8) étant conçu de telle sorte que, lors d'un déplacement du premier élément de suspension horizontale longitudinale (6) par rapport au deuxième élément de suspension horizontale longitudinale (7), le premier élément ressort (8) est déformable,
**caractérisé par le fait que**
le premier élément de suspension horizontale longitudinale (6) présente une première zone de déformation (14) et une deuxième zone de déformation (15), où, dans une position neutre, la première zone de déformation (14) et la deuxième zone de déformation (15) sont en contact actif avec le premier élément ressort (8), et, lors d'un déplacement relatif du premier élément de suspension horizontale longitudinale (6) par rapport au deuxième élément de suspension horizontale longitudinale (7), soit la première zone de déformation (14), soit la deuxième zone de déformation (15), est en contact actif avec le premier élément ressort (8).

2. Siège de véhicule (1) et suspension horizontale longitudinale (2) selon la revendication 1, **caractérisé par le fait que**
le châssis en ciseaux (5) présente une première paire de ciseaux (9) et une deuxième paire de ciseaux (10) avec respectivement un premier bras oscillant (11) et un deuxième bras oscillant (12), un premier tube transversal de liaison (13) étant disposé entre les premiers bras oscillants (11) et/ou les deuxièmes bras oscillants (12), et le premier élément de suspension horizontale longitudinale (6) étant relié au premier tube transversal de liaison (13).

3. Siège de véhicule (1) et suspension horizontale longitudinale (2) selon l'une des revendications 1 ou 2,
**caractérisé par le fait que**
le premier élément ressort (8) s'étend dans une direction longitudinale (L).

4. Siège de véhicule (1) et suspension horizontale longitudinale (2) selon l'une des revendications 1 à 3,
**caractérisé par le fait que**
la suspension horizontale longitudinale (2) présente un deuxième élément ressort (16), lequel s'étend dans une direction longitudinale (L).

5. Siège de véhicule (1) et suspension horizontale longitudinale (2) selon l'une des revendications 1 à 4,
**caractérisé par le fait qu'**
une unité de verrouillage (17) est prévue pour le verrouillage de la suspension horizontale longitudinale (2), laquelle est montée sur la partie supérieure de suspension (4) de manière à pouvoir pivoter autour d'un axe de pivotement vertical (18), l'unité de verrouillage (17) présentant un premier évidement (19), lequel est apte à venir en contact avec un élément boulon (20), s'étendant dans la direction verticale, du premier élément de suspension horizontale longitudinale (6).

6. Siège de véhicule (1) et suspension horizontale longitudinale (2) selon la revendication 5, **caractérisé par le fait qu'**
un élément ressort (21), en particulier un ressort de traction, est disposé entre l'unité de verrouillage (17) et le deuxième élément de suspension horizontale longitudinale (7) de telle sorte que, lors du verrouillage de la suspension horizontale longitudinale (2), l'élément boulon (20) et le premier évidement (19) sont aptes à venir en contact lors d'un déplacement relatif du premier élément de suspension horizontale longitudinale (6) et du deuxième élément de suspension horizontale longitudinale (7).

7. Siège de véhicule (1) et suspension horizontale longitudinale (2) selon la revendication 2, **caractérisé par le fait que**
la première paire de ciseaux (9) et la deuxième paire de ciseaux (10) comportent chacune un palier fixe (48) et trois paliers libres (47), l'un des paliers (47, 48) étant disposé à une extrémité du premier bras oscillant (11) ou du deuxième bras oscillant (12) et le palier fixe (48) étant relié à chaque fois à la partie inférieure de suspension (3), la partie supérieure de suspension (4) présentant des éléments de rail de guidage (53) qui sont en contact avec les paliers libres (47) des bras oscillants (11, 12).
